# EUROPEAN PATENT APPLICATION

(11) **EP 4 730 501 A1**
(43) Date of publication of application: **22.04.2026**
(21) Application number: 24886375.5
(22) Date of filing: 01.11.2024
(51) Int. Cl.: H01M 50/183, H01M 50/105, H01M 50/271, H01M 50/383, H01M 50/502, H01M 50/178, H01M 50/242, H01M 50/249

(54) **BATTERY MODULE, BATTERY PACK AND VEHICLE INCLUDING SAME**

(30) Priority: 03.11.2023 KR 20230151094; 05.08.2024 KR 20240104120
(71) Applicant: LG Energy Solution, Ltd., Seoul 07335 (KR)
(72) Inventor: PARK, Gi-Chan, Daejeon 34122 (KR); KIM, Soo-Youl, Daejeon 34122 (KR); CHANG, Hyuk-Kyun, Daejeon 34122 (KR); JUNG, Hye-Mi, Daejeon 34122 (KR)
(74) Representative: Plasseraud IP
(86) International application number: PCT/KR2024/017093
(87) International publication number: WO 2025/095705

(57) **Abstract**

The present disclosure relates to a battery module including a plurality of battery cells having a storage portion and a sealing portion, respectively, and configured to be stacked on each other, a module case configured to store the plurality of battery cells in an inner space, and a pressing member disposed such that at least one surface faces at least one surface of a terrace portion where an electrode lead is located, among the sealing portions of the battery cells, and such that at least another surface faces at least one surface of the module case, and configured to pressurize the terrace portion when internal pressure of the battery cell increases.

## Description

### TECHNICAL FIELD

The present disclosure relates to a battery module, and a battery pack and a vehicle including the same.

This application is based on and claims priority from Korean Patent Application No. 10-2023-0151094, filed on November 03, 2023, with the Korean Intellectual Property Office, the disclosure of which is incorporated herein in its entirety by reference.

This application is based on and claims priority from Korean Patent Application No. 10-2024-0104120, filed on August 05, 2024, with the Korean Intellectual Property Office, the disclosure of which is incorporated herein in its entirety by reference.

### BACKGROUND ART

Secondary batteries, which are easy to apply depending on the product group and have electrical features such as high energy density and the like, are generally used in electric vehicles (EVs) or hybrid electric vehicles (HEVs) that are driven by an electrical drive source, as well as in portable devices.

These secondary batteries are attracting attention as a new energy source for improving eco-friendliness and energy efficiency because of the primary advantage of dramatically reducing the use of fossil fuels and another advantage of not generating byproducts resulting from energy use.

Secondary batteries currently widely used include lithium-ion batteries, lithium-polymer batteries, nickel-cadmium batteries, nickel-hydrogen batteries, nickel-zinc batteries, and the like. When a higher output voltage is required, a battery module or battery pack may be configured by connecting a plurality of battery cells in series. In addition, a battery module or battery pack may be configured by connecting multiple battery cells in parallel in order to increase the charge/discharge capacity. Accordingly, the number of battery cells included in the battery module or pack may be set in various ways depending on the required output voltage or charge/discharge capacity.

Meanwhile, since the battery cells undergo chemical reactions during charging and discharging, their performance may deteriorate if they are used at a temperature higher than an appropriate temperature, and if the temperature is not controlled to the appropriate temperature, unexpected ignition or explosion is likely to occur. In addition, the battery module has a structure in which the battery cells are densely stored inside a module frame. Therefore, if a thermal event occurs in any battery cell, high-temperature gas and flames emitted therefrom may spread to adjacent battery cells, causing a chain reaction of explosion in the battery cells, which is very dangerous.

In particular, if the battery module contains multiple battery cells, the high-temperature gas, flames, or sparks generated during thermal runaway in a specific battery cell are likely to erupt to the front and rear of the battery cells where the electrode leads of the battery module are located. As a result, the components located at both ends of the battery module, such as end plates or parts of a bus-bar frame, may be damaged by heat, which may bring about structural collapse.

In addition, the flames emitted to the outside through the end plates may cause thermal propagation to adjacent battery modules. In particular, if flame or the like generated from a specific battery module spreads to the end plate of another battery module, there is a high risk of thermal propagation or chain ignition between modules. This may cause the thermal runaway to spread to the entire battery pack including multiple battery modules.

Therefore, there is a need to develop a structure capable of preventing the discharge of high-temperature gas or flame emitted from a battery cell where a thermal event occurs or appropriately controlling the discharge direction, thereby delaying thermal runaway between the battery cells or battery modules.

### DISCLOSURE

### Technical Problem

The present disclosure is designed to solve the problems of the related art, and therefore the present disclosure is directed to providing a battery module with improved safety and reliability by appropriately controlling the venting direction of high-temperature gas or flames generated from a battery cell in the event of an abnormal situation of the battery module or effectively preventing thermal propagation between battery cells or battery modules.

The present disclosure is also to provide a battery pack including a battery module with an improved structure, and a vehicle including the battery pack.

The technical problems that the present disclosure seeks to solve are not limited to the above-mentioned problems, and other problems not mentioned above will be clearly understood by those skilled in the art from the description of the invention described below.

### Technical Solution

According to one aspect of the present disclosure, there is provided a battery module including a plurality of battery cells having a storage portion and a sealing portion, respectively, and configured to be stacked on each other, a module case configured to store the plurality of battery cells in an inner space, and a pressing member disposed such that at least one surface faces at least one surface of a terrace portion where an electrode lead is located, among the sealing portions of the battery cells, and such that at least another surface faces at least one surface of the module case, and configured to pressurize the terrace portion when internal pressure of the battery cell increases.

The module case may include a top plate disposed to cover a top of the battery cell, and the pressing member may be configured to come into contact with the top plate.

The pressing member may be configured to surround at least a portion of the terrace portion.

At least a portion of the pressing member may be disposed on an upper side of the sealing portion.

The pressing member may have a groove formed to be configured such that at least a portion of a folding area of the sealing portion is inserted thereinto.

The pressing member may be configured such that, when venting gas is discharged upward from the battery cell, venting is performed in a central portion of the battery cell.

The pressing member may be formed such that an upper end extends toward a central portion of the battery cell.

The pressing member may be configured to surround all four surfaces of the terrace portion.

The battery module may further include a bus-bar assembly positioned on a side of the terrace portion where the electrode lead is located, among the sealing portions of the battery cell, and electrically connected to the electrode lead, and the pressing member may be positioned on an inner side of the bus-bar assembly.

The battery module may further include a barrier interposed between adjacent battery cells, and the pressing member may be configured to face at least one surface of the barrier.

The pressing member may include an insulating or heat-resistant material.

The pressing member may include two or more different materials.

The pressing member may include two or more materials having different strengths.

According to another aspect of the present disclosure, there is provided a battery pack including a battery according to the present disclosure.

According to another aspect of the present disclosure, there is provided a vehicle including a battery pack according to the present disclosure.

### Advantageous Effects

According to one aspect of the present disclosure, when an abnormal situation such as thermal runaway occurs in a battery cell, it is possible to prevent or suppress the discharge of venting gas or flames toward the terrace portion. In particular, the space near the terrace portion of the battery cell may be relatively wide in the inner space of the battery module. However, according to the above aspect, since venting gas or flames are not discharged from the battery cell where a thermal event has occurred toward the terrace portion, it is possible to suppress or block propagation of thermal runaway due to the venting gas or flames to other battery cells through the space near the terrace portion.

In particular, according to an embodiment of the present disclosure, even if the internal pressure of the battery cell increases, the fused (sealed) part of the sealing portion may be prevented from being opened by the pressing member, thereby preventing the seal breakdown of the sealing portion. Therefore, it is possible to prevent high-temperature gas or flames from being discharged to the components positioned adjacent to the terrace portion, in particular, electrical components such as a bus-bar assembly or a module terminal disposed on the outer side thereof. Therefore, it is possible to prevent damage to various components located in the corresponding direction, and to prevent unintentional interruption of electrical connections between the battery cells or battery modules.

According to another aspect of the present disclosure, directional venting for discharging venting gas or the like in an intended direction may be more easily implemented. For example, according to an embodiment of the present disclosure, gas or flame may be discharged to the top of the battery cell or battery module. In this case, the safety and reliability of the battery module including multiple battery cells may be further improved.

In addition, according to another aspect of the present disclosure, since the pressing member is configured to be coupled to a bus-bar assembly, it is possible to facilitate the assembly of the pressing member and simplify the manufacturing process.

In addition, according to another aspect of the present disclosure, it is possible to prevent other battery modules from being thermally damaged by high-temperature gas or flame generated from a specific battery module. In particular, according to this aspect of the present disclosure, propagation of thermal runaway between modules may be effectively prevented or delayed.

Therefore, it is possible to prevent or delay events due to thermal runaway in a battery pack including multiple battery modules or a device equipped with the same, such as fire or explosion.

In particular, in the case of electric vehicles, suppressing or delaying propagation of thermal runaway between the battery cells or battery modules may secure sufficient time for occupants to escape or drive.

In addition, the present disclosure may have various other effects, and these will be described in the respective embodiments, or description of effects that may be easily inferred by those skilled in the art will be omitted.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a perspective view schematically illustrating the configuration of a battery module according to an embodiment of the present disclosure.
FIG. 2 is a partially exploded perspective view illustrating the battery module in FIG. 1.
FIG. 3 is a perspective view schematically illustrating the configuration of a battery cell included in a battery module according to an embodiment of the present disclosure.
FIG. 4 is a perspective view schematically illustrating a portion of a battery module including a pressing member according to an embodiment of the present disclosure.
FIG. 5 is a front view schematically illustrating a pressing member included in a battery module according to an embodiment of the present disclosure.
FIG. 6 is a top cross-sectional view schematically illustrating a state in which a pressing member is coupled to a battery cell according to an embodiment of the present disclosure.
FIG. 7 is a side cross-sectional view schematically illustrating a portion of a battery module including a pressing member according to an embodiment of the present disclosure.
FIG. 8a is a front view schematically illustrating a pressing member according to an embodiment of the present disclosure.
FIG. 8b is an enlarged view of an upper portion of a pressing member according to an embodiment of the present disclosure.
FIG. 9 is a side cross-sectional view illustrating a portion of a battery module including a pressing member according to another embodiment of the present disclosure.
FIG. 10 is a front view illustrating a pressing member according to another embodiment of the present disclosure.
FIG. 11 is a front view illustrating a pressing member included in a battery module according to another embodiment of the present disclosure.
FIG. 12 is a cross-sectional view illustrating a pressing member included in a battery module according to another embodiment of the present disclosure.
FIG. 13 is a cross-sectional view schematically illustrating the partial configuration of a battery module including a pressing member according to another embodiment of the present disclosure.
FIG. 14 is a front view illustrating a pressing member according to another embodiment of the present disclosure.
FIG. 15 is a cross-sectional view schematically illustrating the partial configuration of a battery module including a pressing member according to another embodiment of the present disclosure.
FIG. 16 is a perspective view illustrating a battery module including a pressing member according to another embodiment of the present disclosure.
FIG. 17 is a front view illustrating a pressing member included in a battery pack according to another embodiment of the present disclosure.
FIG. 18 is a drawing illustrating a process in which a lower surface of a top plate and a pressing member are coupled according to another embodiment of the present disclosure.
FIG. 19 is a drawing illustrating a process in which a lower surface of a top plate and a pressing member are coupled according to another embodiment of the present disclosure.
FIG. 20 is an exploded perspective view schematically illustrating a battery pack including a battery module according to an embodiment of the present disclosure.
FIG. 21 is a schematically perspective view illustrating the configuration of a battery pack according to another embodiment of the present disclosure.
FIG. 22 is a schematically perspective view of a vehicle including a battery pack according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

In addition, the present disclosure may include various embodiments. Redundant descriptions of substantially the same or similar configurations will be omitted from respective embodiments, and a description will be made based on differences therebetween.

The sizes of some elements shown in the attached drawings may be exaggerated, instead of reflecting their actual sizes, for convenience of explanation and clarification. In addition, the same reference numerals may be assigned to the same elements among the embodiments.

Although "first", "second", etc. are used to describe various elements, these elements are not limited to these terms. These terms are only used to distinguish one element from another element, and unless otherwise stated, a first element may also be a second element.

Throughout the specification, unless otherwise stated, respective elements may include a single or a plurality of elements.

Configuration in which an element is disposed "in the upper portion (or lower portion)" or "at the top (or bottom)" of a target element may indicate that the element may be disposed in contact with the upper surface (or lower surface) of the target element and that another element may be interposed between the target element and the element disposed at the top (or bottom) of the target element.

Additionally, the expression "an element is 'connected', 'coupled', or 'fastened' to another element" should be understood that the elements may be directly connected, coupled, or fastened to each other, and that another element may be "interposed" between the elements, or that the elements may be "connected", "coupled", or "fastened" through another element.

A single element herein should be construed to encompass a plurality of elements. In this specification, the expression "an element 'is configured as' or 'includes' other elements or steps" should be understood that the element may exclude some other elements or steps and that the element may further include additional elements or steps.

Throughout the specification, "A and/or B", unless otherwise stated, may denote A or B, or A and B.

Meanwhile, in the embodiment of the present disclosure, the X-axis direction, unless otherwise specified, in which a plurality of battery cells 100 are stacked will be referred to as a left-right direction, the Y-axis direction, which is a horizontal direction orthogonal to the cell stacking direction, will be referred to as a front-back direction, and the Z-axis direction orthogonal to the X-Y plane will be referred to as an up-down direction (vertical direction). Furthermore, the Y-axis direction may also be referred to as a longitudinal direction of the cell in the case of a pouch-type cell. In addition, the left-right direction, the front-back direction, and the up-down direction may also be expressed as a first direction, a second direction, and a third direction, respectively.

Meanwhile, although terms indicating directions such as up, down, left, right, front, and back directions are used in this specification, it is obvious to those skilled in the art that these terms are only for convenience of explanation and may vary depending on the position of the target object or the position of the observer.

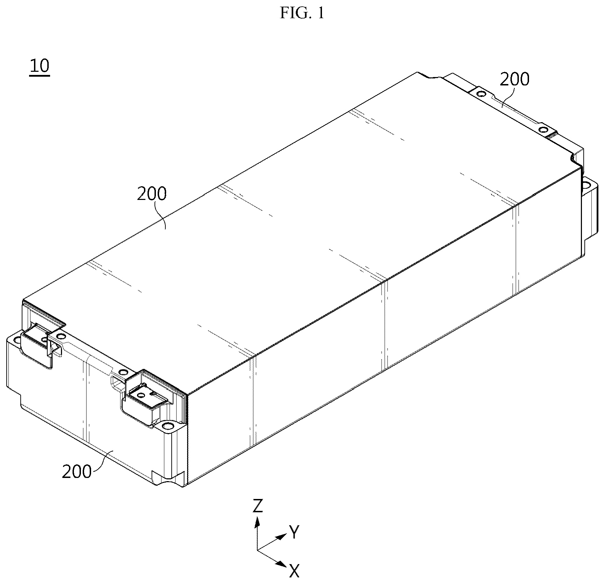

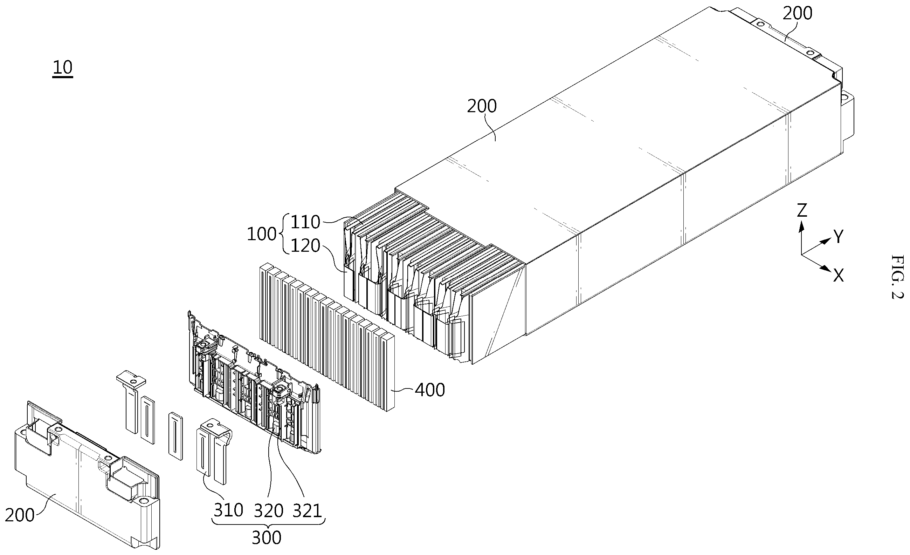

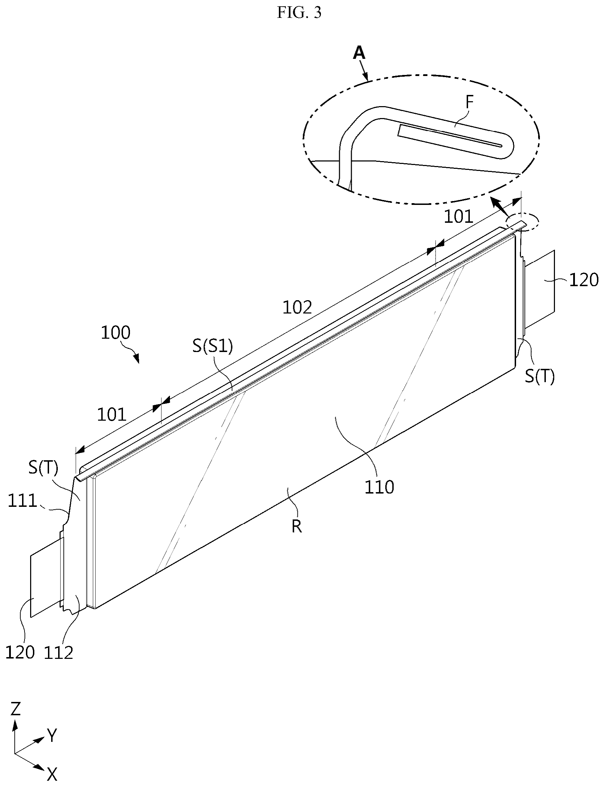

FIG. 1 is a perspective view schematically illustrating the configuration of a battery module 10 according to an embodiment of the present disclosure. FIG. 2 is a partially exploded perspective view illustrating the battery module 10 in FIG. 1. FIG. 3 is a perspective view schematically illustrating the configuration of a battery cell 100 included in a battery module 10 according to an embodiment of the present disclosure.

Referring to FIGS. 1 to 3, the battery module 10 according to an embodiment of the present disclosure may include a battery cell 100, a module case 200, a bus-bar assembly 300, and a pressing member 400.

The battery cell 100 may include an electrode assembly, a cell case 110 that accommodates the electrode assembly, and an electrode lead 120 that is connected to the electrode assembly and extends outward from the cell case 110, thereby functioning as an electrode terminal.

The battery cell 100 may be a pouch-type secondary battery. Such a pouch-type secondary battery may be configured as a pouch in which a metal layer made of aluminum is interposed between polymer layers in the cell case 110.

Specifically, referring to FIG. 3, the battery cell 100 may include a storage portion R and a sealing portion S. The storage portion R may store an electrode assembly and an electrolyte. For example, the cell case 110 may have two pouches, for example, a left pouch and a right pouch, and the storage portion R may be positioned in the central part between the left pouch and the right pouch so that the edge of the storage portion R may be sealed. In this case, the storage portion R in at least a portion of the two pouches may have an inner space formed in a concave shape facing the electrode assembly, and the electrode assembly may be mounted in the inner space. Although the embodiment illustrated in FIG. 3 shows a double cup configuration in which the storage portion R is formed on both sides of the cell case 110, the present disclosure is not necessarily limited to the shape of the cell case 110. For example, the battery cell 100 may be configured in a single cup shape in which the storage portion R is formed only on one side of the cell case 110.

The sealing portion S may be configured to surround the storage portion R, and may be a portion in which the edges of the storage portion R are heat-fused. That is, the sealing portion S may be formed by sealing the edge of the storage portion R. In particular, the battery cell 100 may have four sides (edges) of the storage portion R. In this case, all of the four sides may be sealed, or only three sides may be sealed. A cell with four sealed sides may be called a four-sided sealing cell, and a cell with three sealed sides may be called a three-sided sealing cell. For example, in the implemented configuration illustrated in FIG. 3, the battery cell 100 is configured in an upright posture such that the front, rear, and top sides of the left pouch and the right pouch are sealed, and such that the bottom sides of the left pouch and the right pouch are folded, instead of being sealed, to be connected to each other. That is, the battery cell 100 is configured to have three sealed sides.

Each battery cell 100 may have an electrode lead 120. The electrode lead 120 may include a positive electrode lead and a negative electrode lead, and the positive electrode lead and the negative electrode lead may be provided to protrude from the same side (edge) or different sides of the battery cell 100. The cell in which the positive electrode lead and the negative electrode lead are located on the same side may be called a unidirectional cell, and the cell in which the positive electrode lead and the negative electrode lead are located on different sides, in particular, on the opposite sides, may be called a bidirectional cell.

The electrode lead 120 may be configured to extend to the front and/or rear of the sealing portion S of the battery cell 100. In this case, the sealing portion S from which the electrode lead 120 extends outward may be defined as a terrace portion T. Here, the terrace portion T may indicate a sealing portion S that extends in the vertical direction from the front and/or rear ends of the battery cell 100.

Referring to FIG. 3, the sealing portion S may include two terrace portions T and an upper sealing portion S1. Here, the two terrace portions T may indicate the front sealing portion and the rear sealing portion of the battery cell 100.

Referring to part A in FIG. 3, the upper sealing portion S1 may be folded at least once. That is, a portion of the upper sealing portion S1 may be formed to form a folding area F. The front sealing portion or the rear sealing portion, i.e., the terrace portion T, is a portion where the electrode lead 120 is located, so it may be stored inside the module case 200 without being folded. On the other hand, the upper sealing portion S1 may be stored inside the module case 200 in a folded state.

A plurality of battery cells 100 may be included in a battery module 10. In addition, the plurality of battery cells 100 may be stacked on each other in at least one direction. For example, the plurality of battery cells 100 may be arranged side by side in the left-right direction (X-axis direction) while standing in the vertical direction (Z-axis direction). In particular, in the case of a three-sided sealing cell, the respective battery cells 100 may be provided to stand such that the side not having the sealing portion S is located at the bottom. In this case, each battery cell 100 may have the sealing portion S directed in the front-back direction (Y-axis direction) and upward direction (+Z-axis direction), and the storage portion R directed in the left-right direction (X-axis direction).

Meanwhile, the present disclosure is not limited to a specific type or shape of battery cell 100, and various battery cells 100 known at the time of filing the present disclosure may be applied to implement the cell assembly of the present disclosure. In the present embodiment, although a pouch-type secondary battery with high energy density and easy stacking will be described as shown in the drawings, it is obvious that a cylindrical or prismatic secondary battery may also be applied to the battery cell 100.

The module case 200 may be configured to accommodate a plurality of battery cells 100 in the inner space, as shown in FIGS. 1 and 2. That is, the module case 200 may have an empty space formed therein, and a plurality of battery cells 100 may be accommodated in this inner space. For example, the module case 200 may have an upper plate, a lower plate, a left plate, a right plate, a front plate, and a rear plate to form the inner space. In addition, the plurality of battery cells 100 may be stored in the limited inner space. Here, the module case 200 may include a metal and/or plastic material.

In addition, at least some of the plates constituting the module case 200 may be configured in an integrated form. For example, referring to FIG. 2, the module case 200 may be configured as a mono frame in which the upper plate, the lower plate, the left plate, and the right plate are integrated with each other. In this case, the mono frame may have front and rear openings, and the front and rear plates, as end frames, may be coupled to the front and rear openings of the mono frame, thereby sealing the inner space of the mono frame. As another example, the module case 200 may be configured as a U-frame in which the lower plate, the left plate, and the right plate are integrated with each other. In this case, the upper plate, the front plate, and the rear plate may be coupled to the top, front, and rear ends of the U-frame. Meanwhile, the respective components of the module case 200 may be coupled by various fastening methods such as welding or bolting. However, the present disclosure is not limited to a specific material, shape, or coupling method of the module case 200.

According to an embodiment, although not shown in the drawing, at least one of the plates constituting the module case 200, for example, the upper plate, may include at least one venting area through which venting gas emitted from the battery cell 100 is discharged. For example, the venting area may be configured as one of either a venting hole or a preliminary fracture line. According to an implemented configuration of the present disclosure, the upper plate of the module case 200 may be provided with a venting area to induce directional venting to the top of the battery module 10.

The bus-bar assembly 300 may be configured to be electrically connected to the electrode lead 120. The bus-bar assembly 300 may be configured such that the electrode leads 120 of a plurality of battery cells 100 are connected to each other. More specifically, the bus-bar assembly 300 may be configured to support the electrode leads 120, facilitate the interconnection of the electrode leads 120, and enable sensing of voltage or the like from the electrode leads 120.

The bus-bar assembly 300 may be positioned adjacent to a terrace portion T where the electrode lead 120 is positioned, among the sealing portions S of the battery cell 100. For example, the bus-bar assembly 300 may be positioned adjacent to the terrace portion T where the electrode lead 120 is positioned, among the sealing portions S facing the front side (one side facing the -Y-axis direction) of the battery cell 100.

As shown in FIG. 2, the bus-bar assembly 300 may include a bus-bar terminal 310 and a bus-bar frame 320.

The bus-bar terminal 310 may be configured to electrically connect two or more electrode leads 120, or to be connected to one or more electrode leads 120 and transmit sensing information to a control unit such as a BMS (battery management system).

In addition, the bus-bar frame 320 may be made of an electrically insulating material, such as a plastic material. The bus-bar frame 320 may be configured such that the bus-bar terminal 310 is seated on and fixed to the same. Furthermore, the bus-bar frame 320 may have a slit formed thereon. In addition, the bus-bar terminal 310 may be attached to the outer surface of the bus-bar frame 320, for example, the front side (in the -Y-axis direction) thereof. In this case, the electrode lead 120 may pass through the slit of the bus-bar frame 320 and come into contact with the bus-bar terminal 310 located on the outer side. In particular, a single electrode lead 120 or two or more electrode leads 120 stacked on each other may be fixed to the bus-bar terminal 310. In this case, the coupling between the electrode lead 120 and the bus-bar terminal 310 may be performed by laser welding or ultrasonic welding, but various other coupling methods may also be applied.

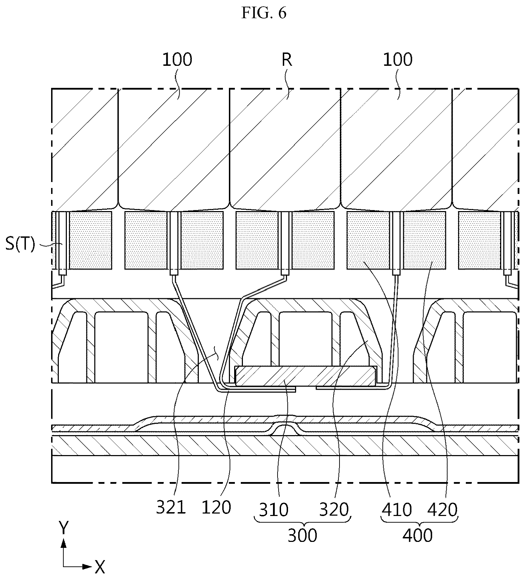

The pressing member 400 may be positioned on the inner side of the bus-bar frame 320. Specifically, referring to FIG. 6, the pressing member 400 may be positioned on the inner side of the bus-bar frame 320, and the bus-bar terminal 310 may be positioned on the outer side of the bus-bar frame 320. That is, the pressing member 400 and the bus-bar terminal 310 may be disposed on the opposite sides of the bus-bar frame 320. In this case, the electrode lead 120 may pass through the slit 321 of the bus-bar frame 320 and come into contact with the bus-bar terminal 310 located on the outside.

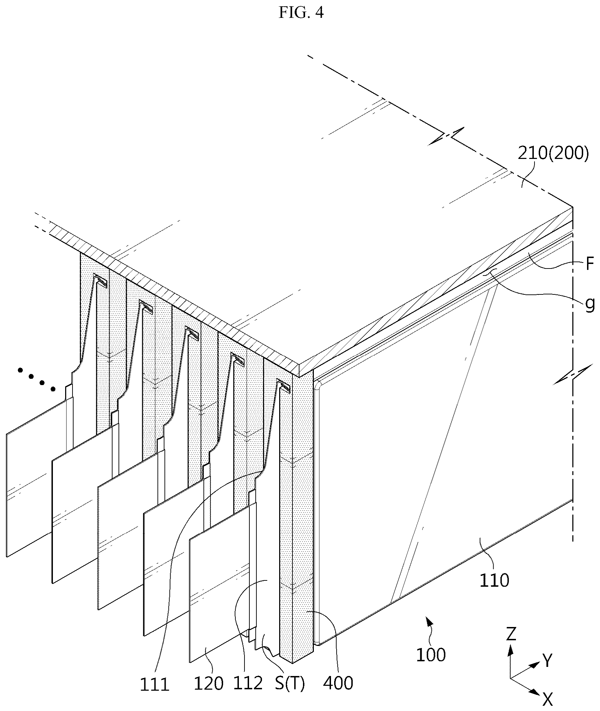

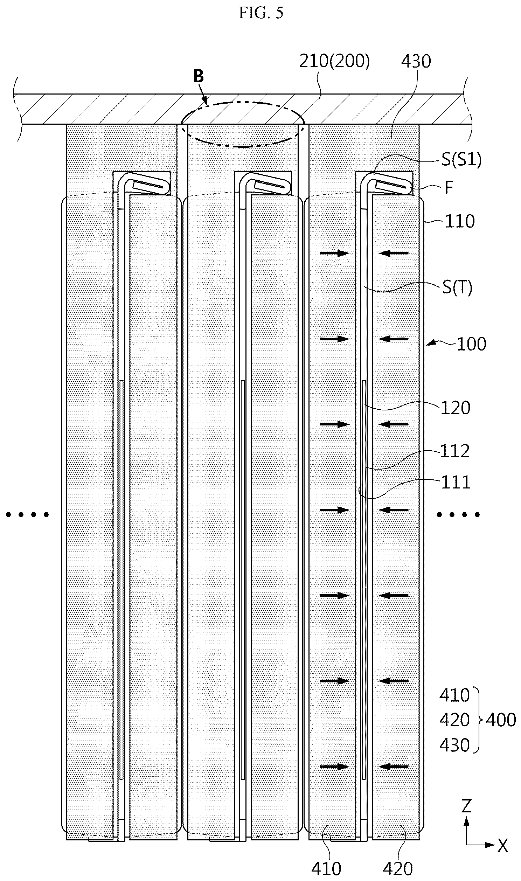

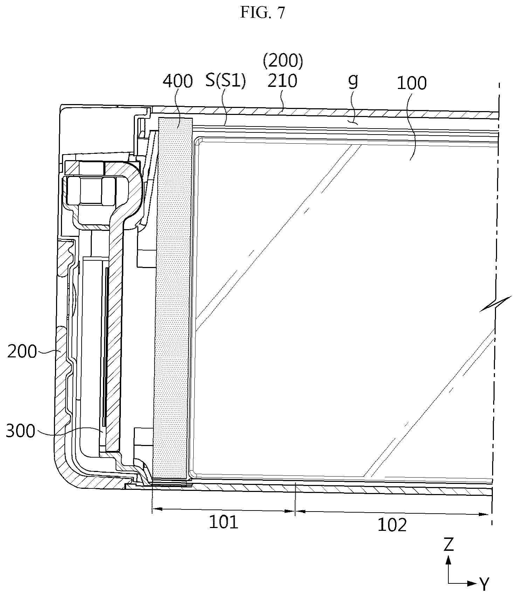

FIG. 4 is a perspective view schematically illustrating a portion of a battery module including a pressing member according to an embodiment of the present disclosure. FIG. 5 is a front view schematically illustrating a pressing member included in a battery pack according to an embodiment of the present disclosure. FIG. 6 is a top cross-sectional view schematically illustrating a state in which a pressing member is coupled to a battery cell according to an embodiment of the present disclosure. FIG. 7 is a side cross-sectional view schematically illustrating a portion of a battery pack including a pressing member according to an embodiment of the present disclosure.

Referring to FIGS. 4 and 5, at least a portion of the pressing member 400 may be disposed to face at least one surface of the terrace portion T. The pressing member 400 may be configured to pressurize the terrace portion T from both sides of the terrace portion T. One surface of the pressing member 400 may be disposed to face a first surface 111 of the terrace portion T, and the another surface of the pressing member 400 may be disposed to face a second surface 112 of the terrace portion T facing the opposite direction to the first surface 111. Here, the first surface 111 of the terrace portion T may be one surface facing the left direction (e.g., -X-axis direction), and the second surface 112 may be one surface facing the right direction (e.g., +X-axis direction). For example, as indicated by the arrow in the drawing, a portion of the pressing member 400 positioned on the left side of the terrace portion T may pressurize the terrace portion T to the right, and a portion positioned on the right side of the terrace portion T may pressurize the terrace portion T to the left.

The pressing member 400 may be configured to pressurize the terrace portion T when the internal pressure of the battery cell 100 increases. The pressing member 400 may pressurize the entirety or a portion of the terrace portion T, as well as the electrode leads 120, thereby preventing any part of the terrace portion T from being opened.

According to the above embodiment of the present disclosure, the pressing member 400 may be configured to suppress the terrace portion T from being opened or separated. In particular, the sealing portion S (e.g., the terrace portion T) of the battery cell 100 is a fused portion that may have lower durability against high temperature, pressure, flame, or the like, compared to the storage portion R of the battery cell 100. However, according to the above embodiment of the present disclosure, since the terrace portion T of the battery cell 100 is protected by the pressing member 400, it is possible to prevent the terrace portion T from being affected by venting gas or flames discharged from other battery cells 100. Therefore, it is possible to effectively prevent propagation of thermal runaway between the battery cells 100 inside the battery module 10.

In addition, by pressurizing both sides (e.g., the left side and the right side) of the terrace portion T, it is possible to prevent the terrace portion T from being opened to both sides or moving in one direction. As described above, when the terrace portion T is pressed from both sides, since the terrace portion T is reliably pressurized, the sealing maintenance performance for the terrace portion T may be further improved.

According to an embodiment, referring to part B in FIG. 5, the pressing member 400 may be disposed so that at least one surface thereof faces at least one surface of the module case 200. That is, at least one surface of the pressing member 400 may be formed to extend toward the module case 200.

Referring to FIG. 4, one surface of the battery cell 100 and one surface of the module case 200 configured to accommodate the battery cell 100 may be disposed to be spaced a specified distance apart from each other. That is, an empty space g may be formed between one surface of the battery cell 100 and one surface of the module case 200 configured to accommodate the battery cell 100. When a thermal event occurs, venting gas or flame emitted from a battery cell 100 may move to other nearby battery cells 100 through the empty space g.

According to the above embodiment of the present disclosure, when a thermal event occurs in one battery cell 100, the high-temperature gas or flame emitted therefrom may be prevented from spreading to other battery cells 100 through the empty space g between the module case 200 and the battery cell 100. Therefore, a chain explosion of battery cells 100 may be prevented and/or delayed.

Referring to FIG. 4, the pressing member 400 may be configured to extend in the vertical direction (Z-axis direction) along the terrace portion T. In order to prevent gas from venting through the terrace portion T, the pressing member 400 may be configured to extend in the vertical direction (Z-axis direction) corresponding to the shape of the terrace portion T and pressurize the entire length of the terrace portion T. For example, the vertical length of the pressing member 400 may be substantially the same as or greater than the vertical length of the terrace portion T.

That is, the pressing member 400 may pressurize the entire terrace portion T from the bottom to the top, thereby preventing the entire terrace portion T from being opened or ruptured. According to the above-implemented configuration of the present disclosure, gas or flame may be completely blocked from venting through the terrace portion T, and the terrace portion T may be more reliably prevented from being ruptured due to the pressure of venting gas or flame.

A plurality of pressing members 400 may be provided. The plurality of pressing members 400 may be arranged to be spaced a predetermined distance apart from each other along the stacking direction (X-axis direction) of the battery cell 100.

Referring to FIGS. 4 and 5, the module case 200 may include a top plate 210 (e.g., an upper plate). The top plate 210 may be disposed to cover the top of the battery cell 100. In this case, referring to part B in FIG. 5, the pressing member 400 may be configured to be in contact with the top plate 210 of the module case 200. That is, the upper surface of the pressing member 400 may be in direct contact with the top plate 210.

Referring to FIG. 2 and FIG. 7, the battery cell 100 may be roughly divided into edge portions 101 at the front and rear ends and a central portion 102 therebetween. The pressing member 400 may be configured to extend to the top plate 210 in the vertical direction (Z-axis direction) and pressurize the edge portion 101 of the upper portion (e.g., an upper sealing portion S1) of the battery cell 100 in the longitudinal direction (Y-axis direction).

The pressing member 400 may induce high-temperature gas or flames generated from the battery cell 100 to vent upward when the battery module 10 is in an abnormal state. In the case where the front and/or rear terrace portion T of the battery cell 100 is pressurized by the pressing member 400, venting may be induced in a direction other than the front and/or back direction of the battery module. For example, in this case, it may be more appropriately applied to top venting toward the top of the battery module.

According to the above embodiment of the present disclosure, it is possible to prevent venting at the front and/or rear edge portion 101 in the upper direction of the battery module 10, in addition to the front and/or rear venting through the terrace portion T. In addition, it is possible to induce venting at the central portion 102, excluding the front and/or rear edge portion 101 in the upper direction of the battery cell 100.

According to the above embodiment of the present disclosure, it is possible to prevent high-temperature gas or flames discharged from one battery cell 100 from being transferred to other battery cells 100 through the empty space g between the top plate 210 and the battery cell 100. Therefore, it is possible to prevent and/or delay the chain explosion of the battery cells 100.

According to an embodiment, the upper surface of the pressing member 400 and the lower surface of the top plate 210 may be coupled using an adhesive or the like. For example, an adhesive member (not shown), such as an adhesive or an adhesive tape, may be disposed between the upper surface of the pressing member 400 and the lower surface of the top plate 210. However, the coupling of the pressing member 400 and the top plate 210 is not limited to the above embodiment, and may be designed in various ways.

The pressing member 400 may include an insulating or heat-resistant material. For example, the pressing member 400 may be made of or include an insulating or heat-resistant material. For example, the pressing member 400 may include a material having high insulating and/or heat-resistant (including fire-resistant) performance, such as at least one of plastic, rubber, silicon, aerogel, metal, and GFRP (glass fiber reinforced plastic). For example, the pressing member 400 may include a metal material having rigidity and heat resistance in order to physically or chemically prevent the terrace portion T from being ruptured.

According to this implemented configuration of the present disclosure, the heat or flame blocking performance of the terrace portion T may be more stably secured. More specifically, according to the above-implemented configuration, the pressing member 400 having the insulating or heat-resistant performance may effectively block venting gas or flames from moving to other battery cells 100 in the space around the terrace portion T.

However, the material of the pressing member 400 is not limited to the above embodiment, and any material may be applied as long as it exhibits predetermined insulation or heat resistance.

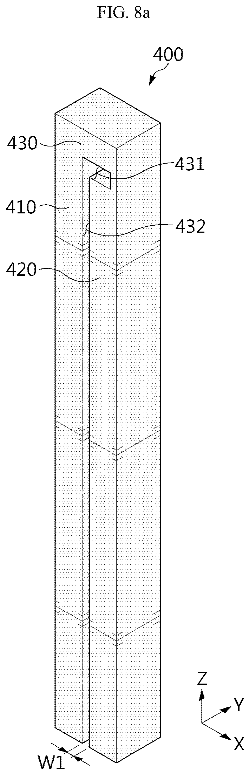

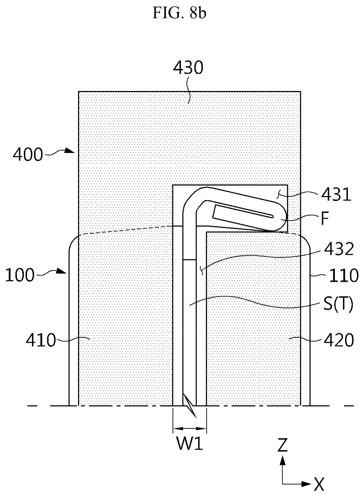

FIG. 8a is a front view schematically illustrating a pressing member according to an embodiment of the present disclosure. FIG. 8b is an enlarged view of an upper portion of a pressing member according to an embodiment of the present disclosure.

Referring to FIG. 5 and FIG. 8a, the pressing member 400 may be configured to surround at least a portion of the terrace portion T. The pressing member 400 may surround at least three surfaces of the terrace portion T. The pressing member 400 may surround both surfaces of the terrace portion T and one surface therebetween. For example, the pressing member 400 may surround a first surface 111 and a second surface 112 of the terrace portion T, and one surface (e.g., an upper surface) therebetween.

The pressing member 400 may include a first pressing portion 410 disposed to face the first surface 111 of the terrace portion T, a second pressing portion 420 disposed to face the second surface 112 of the terrace portion T facing the opposite direction to the first surface 111, and a third pressing portion 430 connecting the first pressing portion 410 and the second pressing portion 420.

The first pressing portion 410 and the second pressing portion 420 may be disposed parallel to the terrace portion T interposed therebetween. The third pressing portion 430 may be disposed perpendicular to the first pressing portion 410 and the second pressing portion 420. For example, the pressing member 400 may have a " 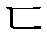 " shape.

The pressing member 400 may further include a slit 432 surrounded by the first pressing portion 410, the second pressing portion 420, and the third pressing portion 430. The terrace portion T may pass through the slit 432 of the pressing member 400.

The slit 432 may be formed to extend long in the vertical direction (Z-axis direction). The upper side of the slit 432 may be closed by the third pressing portion 430, and the lower side of the slit 432 may be open. Therefore, when assembling the pressing member 400 with the battery cell 100, the pressing member 400 may be assembled from the top to the bottom, and the terrace portion T may be inserted into the slit 432 having the lower opening.

The width (length in the X-axis direction) W1 of the slit 432 may be substantially the same as or greater than the thickness (length in the X-axis direction) of the terrace portion T.

According to an embodiment, the width (length in the X-axis direction) W1 of the slit 432 may be greater than the thickness (length in the X-axis direction) of the terrace portion T. That is, one surface of the pressing member 400 may be disposed to be spaced a predetermined distance apart from the terrace portion T. Here, the predetermined distance may indicate a gap that allows the swelling of the battery cell 100 while preventing breakdown of the battery cell 100 due to thermal runaway.

Therefore, the swelling in which the battery cell 100 expands to a certain level or more may be absorbed or allowed to some extent. In addition, when a specific battery cell 100 experiences thermal runaway, even if the internal pressure of the battery cell 100 increases, the pressing member 400 may prevent the fused (sealed) portion of the sealing portion from being opened.

According to another embodiment, the width (length in the X-axis direction) W1 of the slit 432 may be substantially the same as the thickness (length in the X-axis direction) of the terrace portion T. That is, the pressing member 400 may be configured to be in contact with at least one surface of the terrace portion T. The pressing member 400 may be in close contact with at least one surface of the terrace portion T. In this case, the pressing member 400 may be configured to press and/or pressurize the terrace portion T in a normal state. That is, the pressing member 400 may be configured to be in contact with the terrace portion T and pressurize the terrace portion T to a certain level or higher even if a thermal event does not occur in the battery cell 100.

According to the above-implemented configuration of the present disclosure, the pressing member 400 may pressurize the terrace portion T even in a normal state, so that the pressurization of the terrace portion T may be consistently performed from the initial stage when thermal runaway occurs. Therefore, the separation of the terrace portion T may be more reliably prevented, thereby completely preventing the venting gas or the like from escaping through the terrace portion T. In addition, since the terrace portion T is pressurized even in a normal state where thermal runaway does not occur, the position of the terrace portion T of each battery cell 100 may be more stably fixed, and the movement of the battery cell 100 may be prevented.

According to an embodiment, the first pressing portion 410, the second pressing portion 420, and the third pressing portion 430 of the pressing member 400 may be formed integrally. According to another embodiment, the first pressing portion 410, the second pressing portion 420, and the third pressing portion 430 of the pressing member 400 may be bonded by an adhesive or the like. However, the coupling of the pressing member 400 is not limited to the above embodiment, and may be variously designed.

According to the above embodiment of the present disclosure, each of the plurality of pressing members 400 does not pressurize each terrace portion T, but one pressing member 400 may pressurize the terrace portion T from different directions, so that pressurization is easy and the pressing force may be relatively increased. In addition, the pressing member 400 may be easily fixed to the battery cell 100.

At least a portion of the pressing member 400 may be disposed on the upper side of the sealing portion S. At least a portion of the pressing member 400 may be positioned on the upper side of the upper sealing portion S1. That is, the pressing member 400 may cover at least a portion of the upper sealing portion S1.

Specifically, the third pressing portion 430 may be disposed on the upper side of the first pressing portion 410 and the second pressing portion 420. The third pressing portion 430 may be positioned on the upper sealing portion S1. That is, the vertical height of the pressing member 400 may be greater than the vertical height of the battery cell 100.

According to the above embodiment of the present disclosure, the upper sealing portion S1 may be formed to protrude upward from the storage portion R of the battery cell 100. Therefore, it may be suitable in terms of space utilization for the pressing member 400 to protrude upward from the battery cell 100.

A groove 431 may be formed on the pressing member 400 such that at least a portion of the folding area F of the upper sealing portion S1 is inserted thereinto. The groove 431 may be formed on the third pressing portion 430 of the pressing member 400. The groove 431 may extend from the slit 432 of the pressing member 400 and configured to be recessed in the upward direction.

The size of the groove 431 may be substantially the same as or greater than the size of the folding area F of the sealing portion S. For example, the groove 431 may extend from the slit 432 and may be configured to extend in the right direction (+X-axis direction) from the slit 432 so as to correspond to the shape of the folding area F. For example, the groove 431 may have a rectangular shape including horizontal and vertical planes. For example, the groove 431 may include an inclined surface corresponding to the shape of the folding area F. For example, the groove 431 may have a curved surface at least in part. However, the shape and size of the groove 431 are not limited to the above embodiment, and any shape and size capable of insertion of the upper sealing portion S1 (e.g., the folding area F) may be possible.

According to the above embodiment of the present disclosure, the pressing member 400 may protect the upper part of the sealing portion S, i.e., the upper sealing portion S1. In addition, it may prevent the folding area F of the upper sealing portion S1 from being unfolded or deformed.

The pressing member 400 may be configured to allow venting in the central portion 102 of a battery cell 100 when venting gas is discharged upward from at least one battery cell 100.

The pressing member 400 may induce high-temperature gas or flames generated from the battery cell 100 to vent upward when the battery module 10 is in an abnormal state. In the case where the front and/or rear terrace portion T of the battery cell 100 is pressurized by the pressing member 400, venting may be induced in a direction other than the front and/or rear direction of the battery module 10. For example, in this case, it may be more appropriately applied to top venting in the upper direction of the battery module 10.

When venting gas is discharged to the top of the battery cell 100, the edge portion 101 of the upper sealing portion S1 may be ruptured. In this case, the same problem as venting in the terrace portion T may occur. For example, when venting gas is discharged to the edge portions 101 (at the front and rear) of the upper sealing portion S1, the venting gas may move to the terrace portion T where there is a relatively wide space in the inner space of the battery module 10. In addition, venting gas or flames may be transmitted to other battery cells 100 through the space around the terrace portion T.

According to the above embodiment of the present disclosure, since the pressing member 400 surrounds the edge portions 101 of the upper sealing portion S1, venting through the edge portions 101 may be suppressed. In addition, according to the above embodiment of the present disclosure, it is possible to perform venting in the central portion 102 of the battery cell 100 while inducing top venting.

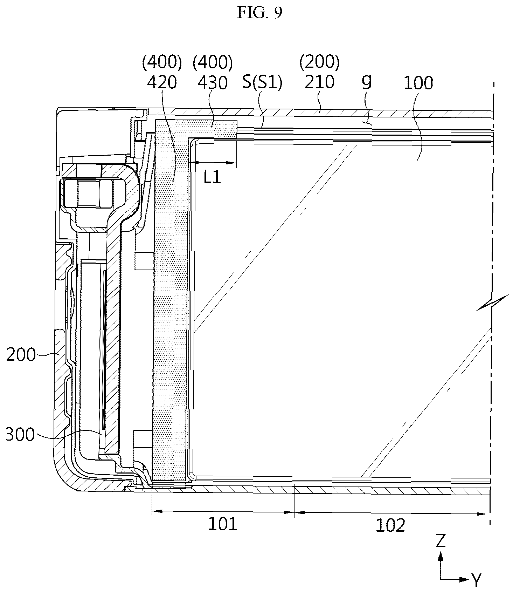

FIG. 9 is a side cross-sectional view illustrating a portion of a battery pack including a pressing member according to another embodiment of the present disclosure.

The pressing member 400 may be formed such that the upper end (upper end in the vertical direction) extends toward the central portion 102 of the battery cell 100. That is, the third pressing portion 430 may be formed to extend toward the central portion 102 of the battery cell 100. The third pressing portion 430 may extend in a direction perpendicular to the first pressing portion 410 and the second pressing portion 420. For example, the pressing member 400 may have an " 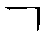 " shape.

The length of the portion extending in the longitudinal direction (Y-axis direction) toward the central portion 102 of the battery cell 100 in the third pressing portions 430 may have a first length L1. For example, the first length L1 may be configured as a predetermined length that allows venting gas discharged from the battery cell 100 to vent upward while restricting venting through the edge portions 101. For example, the first length L1 may be 2% to 25% of the length (length in the Y-axis direction) of the battery cell 100. For example, the first length L1 may be 5% to 20% of the length (length in the Y-axis direction) of the battery cell 100.

According to an embodiment, compared to that in FIG. 7, the area of the upper sealing portion S1 surrounded by the pressing member 400 (third pressing portion 430) may be relatively increased. According to the above embodiment of the present disclosure, it is possible to further induce venting toward the central portion 102 in the upper portion of the battery cell 100 and effectively prevent venting toward the edge portion 101.

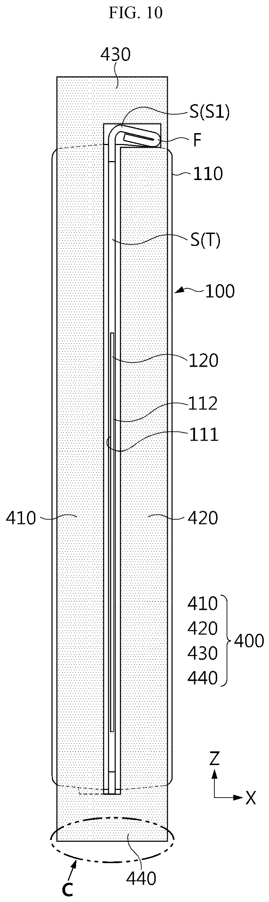

FIG. 10 is a front view illustrating a pressing member according to another embodiment of the present disclosure.

The pressing member 400 may be configured to surround all four surfaces of the terrace portion T. The terrace portion T may be surrounded by the pressing member 400 on the upper, lower, left, and right surfaces.

As shown part C in FIG. 10, the pressing member 400 may further include a fourth pressing portion 440 disposed at the bottoms of the first pressing portion 410 and the second pressing portion 420 so as to connect the first pressing portion 410 and the second pressing portion 420. The fourth pressing portion 440 may be disposed perpendicular to the first pressing portion 410 and the second pressing portion 420. The fourth pressing portion 440 may be disposed parallel to the third pressing portion 430. For example, the pressing member 400 may have a " 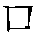 " shape.

According to the above embodiment of the present disclosure, the assembly of the pressing member 400 may be easier. In addition, the fixing force between the pressing member 400 and the battery cell 100 may be further strengthened, and the terrace portion T may be more effectively prevented from moving upward or downward.

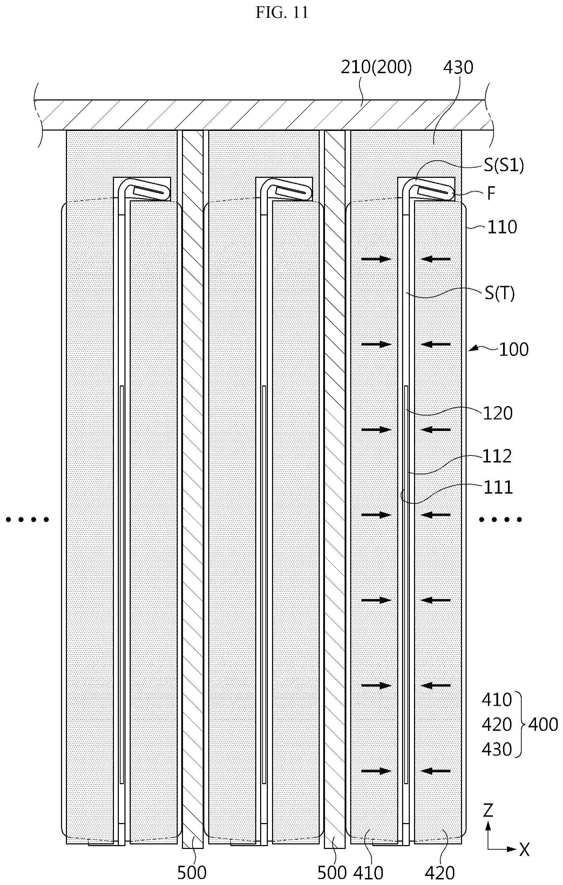

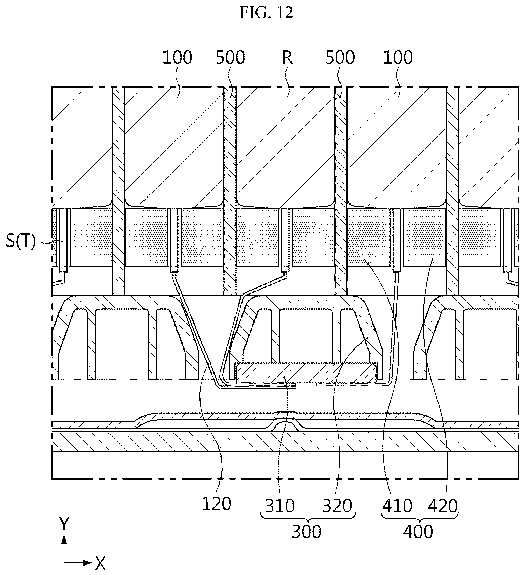

FIG. 11 is a front view illustrating a pressing member included in a battery module according to another embodiment of the present disclosure. FIG. 12 is a cross-sectional view illustrating a pressing member included in a battery module according to another embodiment of the present disclosure.

The battery module 10 may further include a barrier 500. The barrier 500 may be interposed between adjacent battery cells 100. For example, the barrier 500 may be a plate arranged in the vertical direction. That is, in the state where the battery cells 100 are stacked in at least one direction, the barrier 500 may be interposed between the battery cells 100 of the stack. For example, in the state where a plurality of battery cells 100 are stacked along the X-axis direction, the barrier 500 may be inserted between adjacent battery cells 100. One or more barriers 500 may be provided in each battery module 10. In particular, in the case where three or more battery cells 100 are included, multiple barriers 500 may be provided such that each barrier 500 is interposed between every pair of battery cells 100.

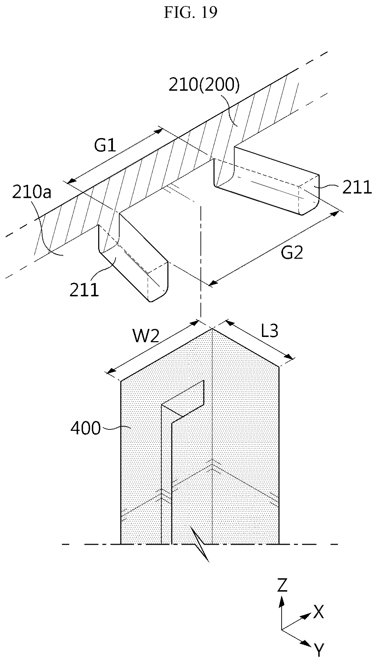

The barrier 500 may be configured to suppress heat, flame, pressure, impact, or the like from being transmitted between the battery cells 100. For example, the barrier 500 may be a thermal barrier configured to block heat or flame from being transmitted between the battery cells 100. Alternatively, the barrier 500 may be a compression pad configured to absorb pressure or shape deformation due to swelling between the battery cells 100. The barrier 500 according to the present disclosure may employ various components interposed between the battery cells 100 in a conventional battery module or battery pack (e.g., the battery pack 1 in FIG. 19).

In particular, the barrier 500 may be interposed between storage portions R of adjacent battery cells 100. That is, as described above, each battery cell 100 may have the storage portion R in its central portion 102, and the barrier 500 may be interposed between the storage portions R of the adjacent battery cells 100 so as to face the storage portions R of the battery cells 100.

According to an embodiment, the barrier 500 interposed between the storage portions R of adjacent battery cells 100 may have an end protruding therefrom and extending to the space between the sealing portions S, particularly the terrace portions T, of the adjacent battery cells 100.

The pressing member 400 may face at least one surface of the barrier 500. The pressing member 400 may be attached to one surface of the barrier 500. According to an embodiment, the battery module 10 according to the present disclosure may further include an adhesive member 501 disposed between the pressing member 400 and the barrier 500. That is, the pressing member 400 may be adhered to the barrier 500. In addition thereto, the pressing member 400 may be fixed to the barrier 500 in various other fastening methods.

According to the above embodiment of the present disclosure, the pressing member 400 may be supported by the barrier 500. In addition, the fixing force of the pressing member 400 may be further improved because the pressing member 400 is attached to the barrier 500.

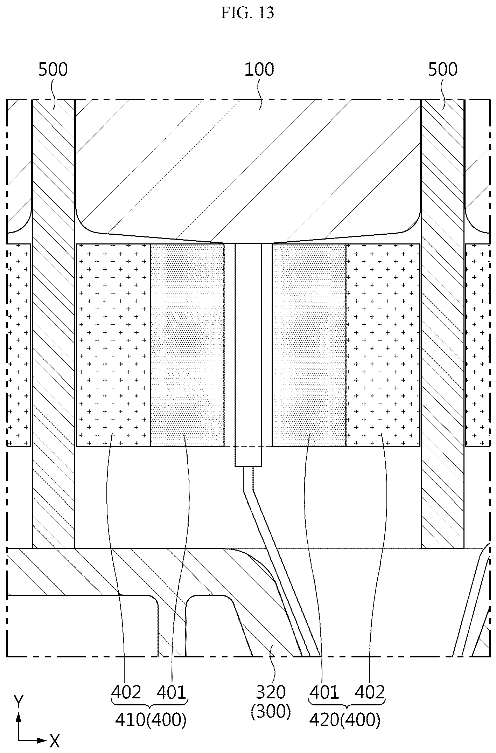

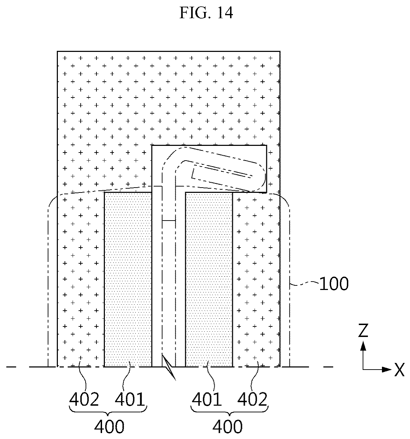

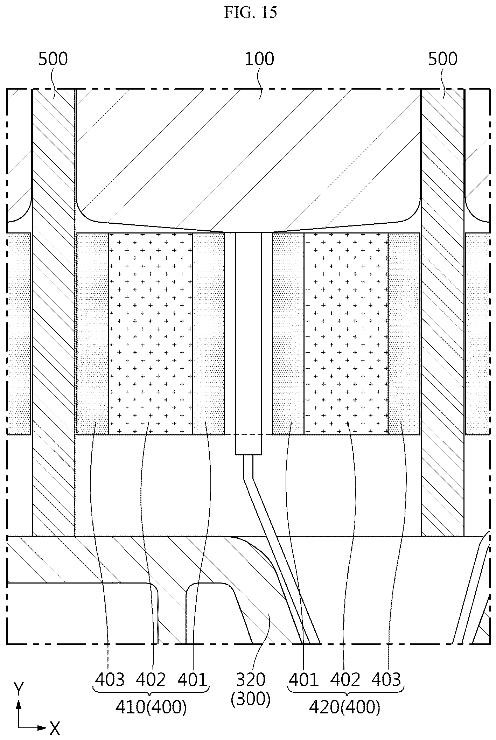

FIG. 13 is a cross-sectional view schematically illustrating the partial configuration of a battery module including a pressing member according to another embodiment of the present disclosure. FIG. 14 is a front view illustrating a pressing member according to another embodiment of the present disclosure. FIG. 15 is a cross-sectional view schematically illustrating the partial configuration of a battery module including a pressing member according to another embodiment of the present disclosure.

According to an embodiment, the pressing member 400 may include two or more different materials. In addition, the pressing member 400 may be configured as a plurality of layers.

Referring to FIG. 13 and FIG. 14, the pressing member 400 may include a first pressing layer 401 including a first material, and a second pressing layer 402 including a second material different from the first material. For example, the first pressing layer 401 may be disposed to face the sealing portion S (e.g., the terrace portion T) and the upper sealing portion S1, and the second pressing layer 402 may be disposed to face the barrier 500.

According to the above embodiment of the present disclosure, the pressing member 400 may have different materials between the layers, thereby providing a function of supporting an adjacent terrace portion T and a function of absorbing swelling occurring in the battery cell 100.

According to an embodiment, the pressing member 400 may include two or more materials having different strengths. For example, the first material and the second material may have different strengths. Here, strength may have substantially the same meaning as hardness, intensity, elasticity, or the like. For example, the first material and the second material may be different in elasticity. In this case, the first material of the first pressing layer 401 facing the terrace portion T may have a lower hardness than the second material of the second pressing layer 402.

According to the above-implemented configuration of the present disclosure, the first pressing layer 401 facing the terrace portion T is configured as a material having a lower hardness than that of the second pressing layer 402, so that, in the case of swelling in which the battery cell 100 expands to a certain level or more, it may be compressed to absorb or allow the swelling of the battery cell 100 to some extent. However, since the second pressing layer 402 has a higher hardness than the first pressing layer 401, swelling of the battery cell 100 may be restricted. Therefore, when a thermal event occurs in the battery cell 100, the terrace portion T of the battery cell 100 may be prevented from being completely opened.

According to another embodiment, referring to FIG. 15, the pressing member 400 may further include a third pressing layer 403 including a third material different from the second material. For example, the first pressing layer 401 and the third pressing layer 403 may be positioned to face adjacent terrace portions T or barriers 500, respectively. For example, the third material may have a different hardness from the second material. For example, the third material may have a different elasticity from the second material. For example, the first material and the third material may be different materials, or may be substantially the same material. According to an embodiment, the first pressing layer 401 and the third pressing layer 403 may have a lower hardness than the second pressing layer 402.

According to an embodiment, as illustrated in FIG. 14, the first pressing portion 410 and the second pressing portion 420 may be configured as the first pressing layer 401 and the second pressing layer 402, but the third pressing portion 430 may be configured as only the second pressing layer 402. The third pressing portion 430 may not directly face the swelling portion when the battery cell 100 is swollen. Therefore, the third pressing portion 430 may be made of a material suitable for securing structural or mechanical stability of the pressing member 400, rather than responding to swelling.

According to the above-implemented configuration of the present disclosure, it is possible to allow swelling in which the battery cell 100 expands to a certain level or more and prevent the terrace portion T of the battery cell 100 from being opened when a thermal event occurs in the battery cell 100

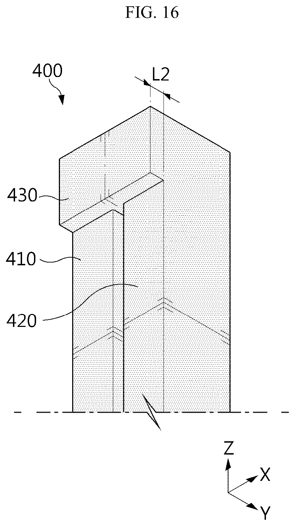

FIG. 16 is a perspective view illustrating a part of a pressing member according to another embodiment of the present disclosure.

One surface of the third pressing portion 430 facing the -X axis may have a flat plate shape in which a groove (e.g., the groove 431 in FIG. 8a) is not formed. That is, the upper sealing portion S1 and/or the folding area F surrounded by the third pressing portion 430 may not be exposed to the outside. When viewed in the X-axis direction, the upper sealing portion S1 and/or the folding area F may not be visible.

The third pressing portion 430 may be configured to protrude in the left direction (-X-axis direction) further than the first pressing portion 410 and/or the second pressing portion 420. The third pressing portion may protrude a predetermined length L2 further than the first pressing portion 410 and/or the second pressing portion 420. For example, it may be configured as a form obtained from the pressing member 400 in FIG. 8a further having a cover capable of covering the upper sealing portion S1 and/or the folding area F. However, the protrusion shape and length of the third pressing portion are not limited to the above embodiment, and may be variously designed.

According to the above-implemented configuration of the present disclosure, it is possible to reliably block venting gas or flames from moving to the space on the terrace portion T. In addition, venting through the edge portions 101 of the upper sealing portion S1 may be suppressed.

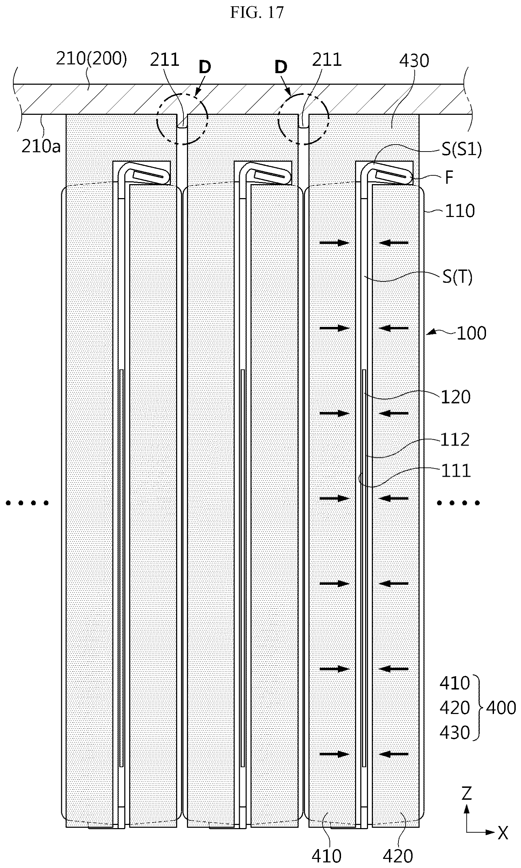

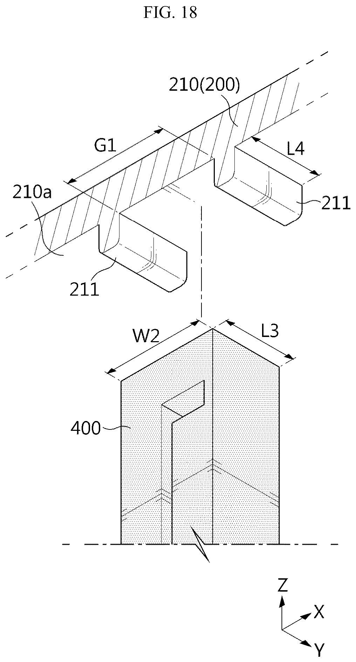

FIG. 17 is a front view illustrating the partial configuration of a battery pack according to another embodiment of the present disclosure. FIG. 18 is a drawing illustrating the state in which a lower surface of a top plate and a pressing member are separated in a battery module according to another embodiment of the present disclosure. FIG. 19 is a drawing illustrating a process in which a lower surface of a top plate and a pressing member are coupled according to another embodiment of the present disclosure.

The top plate 210 may include at least one protrusion 211 protruding downward (-Z-axis direction) from the lower surface 210a of the top plate 210. The protrusion 211 may be disposed between the pressing members 400.

A plurality of protrusions 211 may be provided. The plurality of protrusions 211 may be disposed to be spaced a predetermined distance apart from each other along the stacking direction (X-axis direction) of the battery cells 100. In this case, the distance G1 between the protrusions 211 may be substantially the same as or greater than the width W2 of the pressing member 400 in the X-axis direction.

Referring to FIG. 18, the protrusion 211 may be formed to extend in the longitudinal direction (Y-axis direction) of the battery cell 100. The extension length (length in the Y-axis direction) L4 of the protrusion 211 may substantially correspond to the widthwise length L3 of the pressing member 400. For example, the extension length (length in the Y-axis direction) L4 of the protrusion 211 may be substantially the same as, or shorter or longer than the widthwise length L3 of the pressing member 400. The plurality of protrusions 211 may be disposed on both sides of the pressing member 400. That is, the pressing member 400 may be inserted between the protrusions 211.

According to the above embodiment of the present disclosure, the position of the pressing member 400 may be stably fixed by the protrusions 211. In particular, when a thermal event occurs in the battery cell 100, pressure may be applied to the pressing member 400. According to the above embodiment, even though such pressure is applied, the pressing member 400 may stably remain without departing from its position. In addition, according to the above embodiment, the pressing member 400 may be more effectively prevented from being structurally ruptured by high-temperature gas or flame.

According to an embodiment, the protrusion 211 may be configured so that the fixing force for the pressing member 400 decreases as it gets closer to the inside (central portion 102). That is, the protrusion 211 may be configured so that the fixing force for the pressing member 400 increases as it gets closer to the outside (front side in FIG. 19). For example, referring to FIG. 19, the protrusion 211 may have a portion where the gap between the portion and the pressing member 400 gradually increases as it gets closer to the inside. That is, the distance G2 between the inner ends of the protrusions 211 may be greater than the width W2 of the pressing member 400 in the X-axis direction.

According to the above embodiment of the present disclosure, top venting may be more easily implemented in the battery cell 100. That is, according to the above-implemented configuration, since the fixing force for the pressing member 400 decreases as it gets closer to the inside (central portion 102), venting in the central portion 102 of the upper sealing portion S1 may be stably induced in the battery cell 100. On the other hand, according to the above-implemented configuration, venting at the front or rear edge portions 101 of the upper sealing portion S1 may be effectively prevented in the battery cell 100.

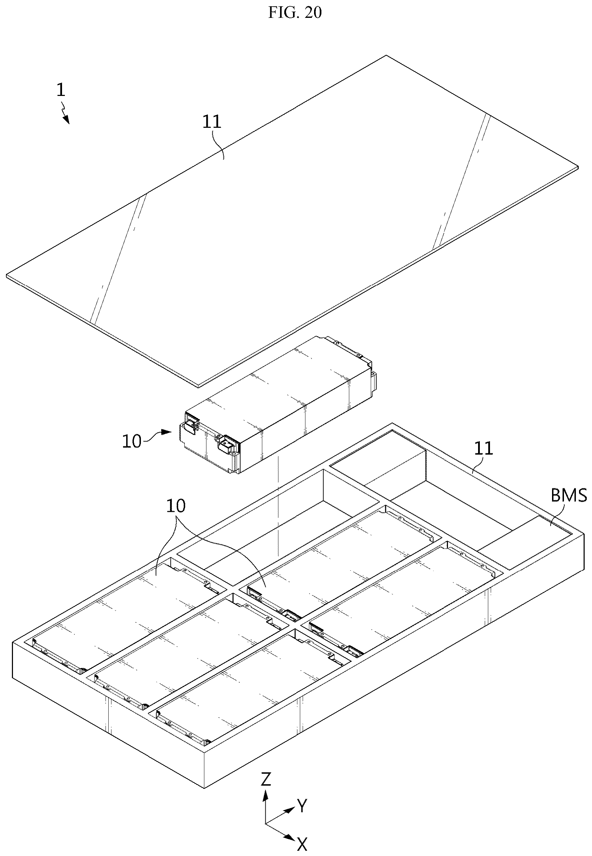

FIG. 20 is an exploded perspective view schematically illustrating a battery pack 1 including a battery module 10 according to an embodiment of the present disclosure.

Referring to FIG. 20, the battery pack 1 according to an embodiment of the present disclosure may include one or more battery modules 10 according to an embodiment of the present disclosure described above. In addition, the battery pack 1 according to the present disclosure may further include various other components, in addition to the battery module 10 according to the present disclosure. For example, the battery pack 1 according to the present disclosure may further include components of the battery pack 1 known at the time of filing the present disclosure, such as a BMS (Battery Management System), a bus-bar, a relay, a current sensor, or the like.

In addition, the battery pack 1 according to the present disclosure may further include a pack case 11 in FIG. 15. This pack case 11 may provide a space in which a battery module 10 according to the present disclosure may be stored. In particular, in the case where a plurality of battery modules 10 are included in the battery pack 1, the pack case 11 may be partitioned by cross-beams into spaces for storing the plurality of battery modules 10.

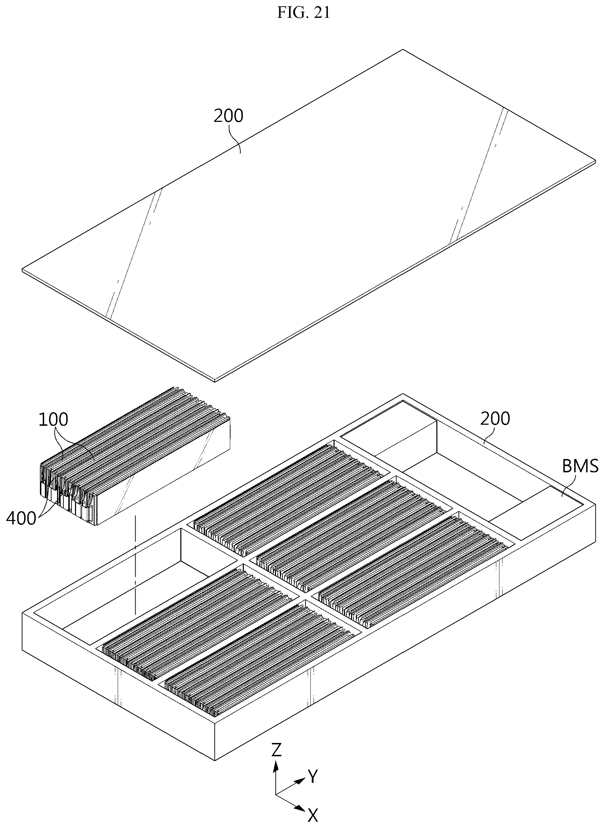

FIG. 21 is a schematically perspective view illustrating the configuration of a battery pack 1 according to another embodiment of the present disclosure.

Referring to FIG. 21, the battery pack 1 according to the present disclosure may include a battery module 10 according to the present disclosure, and may be configured such that the module case 200 of the battery module functions as a pack case, excluding the pack case. In this case, components of the battery pack, such as a BMS, a bus-bar, or a relay, may be disposed inside the module case 200. This type of battery pack 1 is also called a cell-to-pack (CTP) type in which the battery cell 100 is directly stored in the pack case. These days, the active development of the CTP-type battery pack 1 is underway, and the present disclosure may also be applied to the CTP-type battery pack 1.

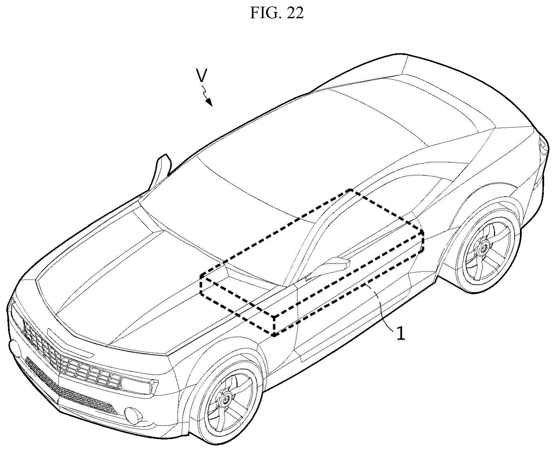

FIG. 22 is a schematically perspective view of a vehicle V including a battery pack 1 according to an embodiment of the present disclosure.

Referring to FIG. 22, the vehicle V according to an embodiment of the present disclosure may include one or more battery packs 1 according to an embodiment of the present disclosure or battery modules 10 according to an embodiment of the present disclosure. The vehicle V according to the present disclosure may be, for example, an electric vehicle, a hybrid vehicle, or a plug-in hybrid vehicle. The vehicle V includes a four-wheel vehicle and a two-wheel vehicle. The vehicle V may be operated by power supplied from the battery pack 1 or battery module 10 according to an embodiment of the present disclosure.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

## Claims

1. A battery module comprising:
a plurality of battery cells having a storage portion and a sealing portion, respectively, and configured to be stacked on each other;
a module case configured to store the plurality of battery cells in an inner space; and
a pressing member disposed such that at least one surface faces at least one surface of a terrace portion where an electrode lead is located, among the sealing portions of the battery cells, and such that at least another surface faces at least one surface of the module case, and configured to pressurize the terrace portion when internal pressure of the battery cell increases.

2. The battery module according to claim 1,
wherein the module case comprises a top plate disposed to cover a top of the battery cell, and
wherein the pressing member is configured to come into contact with the top plate.

3. The battery module according to claim 1,
wherein the pressing member is configured to surround at least a portion of the terrace portion.

4. The battery module according to claim 1,
wherein at least a portion of the pressing member is disposed on an upper side of the sealing portion.

5. The battery module according to claim 1,
wherein the pressing member has a groove formed to be configured such that at least a portion of a folding area of the sealing portion is inserted thereinto.

6. The battery module according to claim 1,
wherein the pressing member is configured such that, when venting gas is discharged upward from the battery cell, venting is performed in a central portion of the battery cell.

7. The battery module according to claim 1,
wherein the pressing member is formed such that an upper end extends toward a central portion of the battery cell.

8. The battery module according to claim 1,
wherein the pressing member is configured to surround all four surfaces of the terrace portion.

9. The battery module according to claim 1,
further comprising a bus-bar assembly positioned on a side of the terrace portion where the electrode lead is located, among the sealing portions of the battery cell, and electrically connected to the electrode lead,
wherein the pressing member is positioned on an inner side of the bus-bar assembly.

10. The battery module according to claim 1,
further comprising a barrier interposed between adjacent battery cells,
wherein the pressing member is configured to face at least one surface of the barrier.

11. The battery module according to claim 1,
wherein the pressing member comprises an insulating or heat-resistant material.

12. The battery module according to claim 1,
wherein the pressing member comprises two or more different materials.

13. The battery module according to claim 1,
wherein the pressing member comprises two or more materials having different strengths.

14. A battery pack comprising a battery module according to any one of claims 1 to 13.

15. A vehicle comprising a battery module according to any one of claims 1 to 13.
